(19) Europäisches Patentamt
European Patent Office
Office européen des brevets

(11) **EP 1 238 740 B1**

(12) **FASCICULE DE BREVET EUROPEEN**

(45) Date de publication et mention
de la délivrance du brevet:
**14.05.2008 Bulletin 2008/20**

(51) Int Cl.:
***B23H 7/30*** *(2006.01)* ***B23H 7/20*** *(2006.01)*

(21) Numéro de dépôt: **01105252.9**

(22) Date de dépôt: **05.03.2001**

(54) **Procédé et dispositif pour usiner une pièce à trois dimensions par fraisage électroérosif**

Verfahren und Vorrichtung zum Bearbeiten eines dreidimensionalen Werkstücks mittels
Funkenerosionsfräsen

Process and apparatus for electroerosion milling three-dimensional workpieces

(84) Etats contractants désignés:
**AT BE CH CY DE DK ES FI FR GB GR IE IT LI LU
MC NL PT SE TR**

(43) Date de publication de la demande:
**11.09.2002 Bulletin 2002/37**

(73) Titulaire: **CHARMILLES TECHNOLOGIES S.A.
1217 Meyrin 1 (CH)**

(72) Inventeurs:
• **Tricarico, Claudio
1260 Nyon (CH)**
• **Delpretti, Roger
1214 Vernier (CH)**

(74) Mandataire: **Micheli & Cie SA
Rue de Genève 122,
Case Postale 61
1226 Genève-Thonex (CH)**

(56) Documents cités:
**EP-A- 0 639 420 US-A- 5 763 843
US-A- 5 847 352 US-A- 5 919 380**

• **PATENT ABSTRACTS OF JAPAN vol. 1997, no.
09, 30 septembre 1997 (1997-09-30) -& JP 09
123025 A (MITSUBISHI ELECTRIC CORP), 13 mai
1997 (1997-05-13)**

**Description**

La présente invention concerne un procédé pour usiner une pièce à trois dimensions par fraisage au moyen d'un dispositif à électroérosion selon lequel

- on entraîne en rotation une électrode-outil de forme cylindrique dont le diamètre est petit par rapport aux dimensions des surfaces à éroder,
- on contrôle au moyen d'une unité de commande numérique le mouvement tridimensionnel relatif entre l'électrode-outil et ladite pièce,
- on enregistre grâce à des moyens informatiques les formes à usiner sous forme d'une superposition de couches virtuelles,
- on simule une trajectoire de l'électrode-outil telle que cette dernière balaye sillon par sillon, successivement chacune des couches virtuelles, et on transmet des signaux de commande correspondants vers l'unité de commande numérique pour effectuer l'usinage par couche,
- on simule grâce à des moyens de régulation l'usure longitudinale de l'électrode-outil le long de sa trajectoire et on transmet des signaux de compensation correspondants vers l'unité de commande numérique de façon à compenser cette usure longitudinale et à maintenir le mouvement de l'extrémité de l'électrode-outil parallèle auxdites couches, en prévoyant plusieurs valeurs pour l'usure longitudinale de l'électrode-outil selon la configuration géométrique mutuelle entre l'électrode-outil et la matière environnante de ladite pièce et en transmettant des signaux de compensation correspondant à chacune de ces valeurs vers l'unité de commande numérique.

Ce procédé d'usinage communément appelé fraisage EDM (Electric Discharge Machining) est par exemple décrit dans les documents EP 0 555 818, CH 689 182 et US 5 911 888 de la déposante. L'expérience dans le domaine du fraisage EDM a montré qu'il est possible de compenser continûment l'usure d'un outil cylindrique ou en forme de tube.

L'hypothèse fondatrice consiste à dire que l'usure volumétrique est constante et le profil de l'outil quasi-invariant. Par suite, en connaissant le volume de matière à usiner sur la pièce, on peut connaître à l'avance l'usure de l'électrode et donc la compenser pas à pas.

En usinant des pièces de plus en plus complexes, il a été possible de constater les limites de validité de l'hypothèse initiale qui s'est avérée très vite insuffisante quand il s'agissait d'atteindre des planéités proches ou inférieures au centième de millimètre.

Dans le cas de géométries complexes, les conditions d'usinage d'une pièce en fraisage EDM peuvent changer de façon dramatique et affecter suffisamment le taux d'usure longitudinale de l'électrode-outil pour que l'empilement des couches successives provoque des erreurs de planéité considérables.

Le document US 5,919,380 correspond à l'état de la technique le plus proche et décrit un procédé et un dispositif d'usinage par fraisage à électroérosion tels que définis dans le préambule des revendications 1 et 10 indépendantes. Dans le procédé et le dispositif connus, on peut prévoir différentes valeurs pour la correction de l'usure longitudinale de l'électrode-outil, par exemple pour tenir compte de l'épaisseur de la couche à usiner ou de la forme de la pièce.

La présente invention a pour but d'améliorer le procédé et le dispositif connus afin d'obtenir un procédé de fraisage EDM permettant une très grande précision et planéité d'usinage.

Le procédé selon l'invention est caractérisé à cet effet par le fait que lesdites valeurs tiennent compte de la configuration géométrique de l'écoulement entre l'électrode-outil et la matière environnante d'un liquide d'usinage utilisé pour l'usinage.

L'utilisation de plusieurs valeurs typiques pour l'usure longitudinale ou volumique de l'électrode-outil en fonction de la configuration géométrique de l'écoulement du liquide d'usinage permet d'obtenir un déplacement très plan de l'extrémité de l'électrode-outil, donc une grande précision de l'usinage.

Favorablement, lesdites valeurs tiennent compte d'une part de la présence ou de l'absence d'une ouverture dans la matière environnante située en-dessous de l'extrémité de l'électrode-outil facilitant l'écoulement du liquide d'usinage et d'autre part de la présence ou de l'absence d'au moins une ou deux parois de la matière environnante situées à une distance de l'électrode-outil qui est plus petite qu'une première distance prédéterminée.

Grâce à ces caractéristiques, il est possible de prendre en compte les principaux facteurs influençant l'usure de l'électrode-outil et donc d'augmenter la précision du fraisage EDM.

Selon un mode d'exécution préféré, on fixe des valeurs de l'usure longitudinale pour les configurations géométriques suivantes:

- une première configuration définie par la présence d'au moins deux parois éloignées d'une distance inférieure à une seconde distance maximale prédéterminée et par l'absence d'ouverture sous l'électrode-outil;
- une seconde configuration définie par la présence d'au moins deux parois éloignées d'une distance inférieure à la seconde distance maximale prédéterminée et par la présence d'une ouverture sous l'électrode-outil;

- une troisième configuration définie par l'absence de paroi située à une distance inférieure à la première distance prédéterminée de l'électrode-outil et la présence d'une ouverture sous l'électrode-outil;
- une quatrième configuration définie par la présence d'une paroi située à une distance inférieure à la première distance prédéterminée de l'électrode-outil et la présence d'une ouverture sous l'électrode-outil;
- une cinquième configuration définie par la présence d'une paroi située à une distance inférieure à la première distance prédéterminée et l'absence d'ouverture sous l'électrode-outil;
- une sixième configuration définie par l'absence de paroi située à une distance inférieure à la première distance prédéterminée et par l'absence d'ouverture sous l'électrode-outil.

Avantageusement on fixe en outre des valeurs de l'usure longitudinale pour les configurations suivantes :

- une septième configuration pour usiner la matière laissée à la frontière des configurations géométriques précédentes et entre ces dernières; et
- une huitième configuration pour effectuer un ou plusieurs usinages de finition.

Ce petit nombre de cas de configurations géométriques permet de segmenter ou de décomposer l'usinage en zones à l'intérieur desquelles l'usure longitudinale ou l'usure volumique peuvent être approchées avec une précision excellente.

De façon avantageuse, on fixe pour chacune des configurations géométriques une valeur de l'usure longitudinale en usinant avec des valeurs pré-établies, en mesurant l'usure longitudinale réelle pour les configurations géométriques et en remplaçant les valeurs pré-établies par les valeurs mesurées de l'usure longitudinale.

Ces caractéristiques permettent de corriger des variations de l'usure longitudinale ou volumique dues à de nombreux autres facteurs, par exemple des variations de température, du degré de contamination du liquide d'usinage par des déchets d'usinage, de la dégradation de liquides d'usinage carbonés due aux décharges électroérosives, etc.

La présente invention concerne également un dispositif d'usinage par électroérosion pour usiner une pièce à trois dimensions par fraisage par électroérosion par couches, comprenant

- un organe pour entraîner en rotation une électrode-outil de forme cylindrique dont le diamètre est petit par rapport aux dimensions des surfaces à éroder,
- une unité de commande numérique destinée à contrôler le mouvement tridimensionnel relatif entre l'électrode-outil et la pièce,
- un module informatique permettant d'enregistrer les formes à usiner sous forme d'une superposition de couches virtuelles,
- un module de simulation permettant de simuler une trajectoire de l'électrode-outil telle que cette dernière balaye sillon par sillon, successivement chacune des couches virtuelles et agencé pour transmettre des signaux de commande correspondants vers l'unité de commande numérique,
- un module de régulation permettant de simuler l'usure longitudinale de l'électrode-outil et sa compensation le long de sa trajectoire et de transmettre vers l'unité de commande numérique des signaux de compensation de façon à régler et compenser cette usure longitudinale pour maintenir le mouvement de l'extrémité de l'électrode-outil parallèle auxdites couches, le module de régulation étant agencé pour prévoir plusieurs valeurs de l'usure longitudinale de l'électrode-outil selon la configuration géométrique mutuelle entre l'électrode-outil et la matière environnante de la pièce et pour transmettre des signaux de compensation correspondant à chacune de ces valeurs vers l'unité de commande numérique, caractérisé par le fait que le module de régulation (MR) est agencé pour prévoir plusieurs valeurs de l'usure longitudinale en tenant compte de la configuration géométrique de l'écoulement entre l'électrode-outil (31) et la matière environnante d'un liquide d'usinage utilisé pour l'usinage.

D'autres avantages ressortent des caractéristiques exprimées dans les revendications dépendantes et de la description exposant ci-après l'invention plus en détail à l'aide de dessins qui représentent schématiquement et à titre d'exemple un mode d'exécution.

La figure 1 illustre schématiquement un dispositif d'usinage par fraisage EDM selon l'invention.

Les figures 2A à 2H sont des vues en coupe illustrant huit différents types de configurations géométriques entre l'électrode-outil et la matière environnante de la pièce à usiner.

Les figures 3A à 3F sont des vues en plan représentant les différentes étapes de l'usinage des zones d'une couche par fraisage EDM, chaque zone étant caractérisée par une configuration géométrique propre.

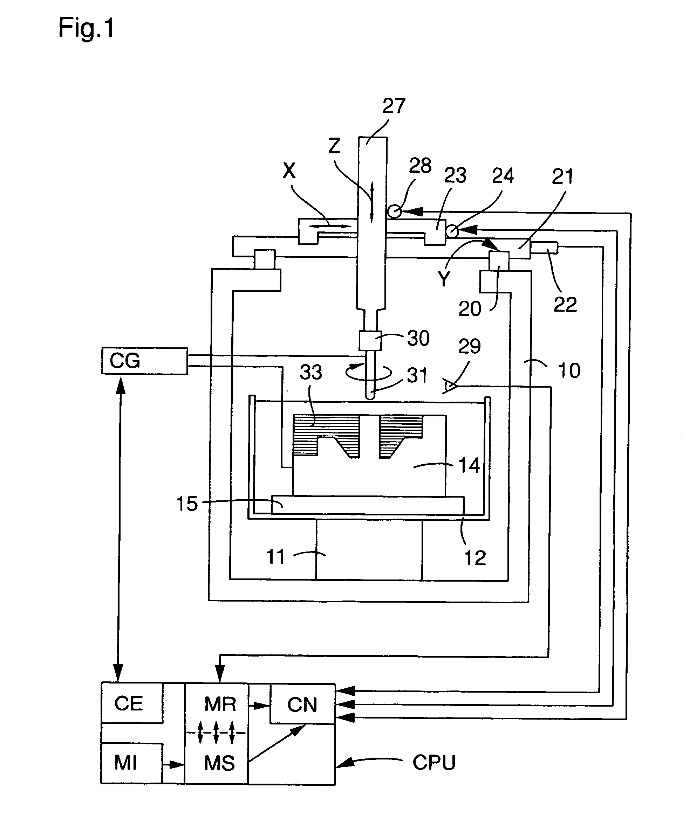

Le mode d'exécution du dispositif à électroérosion représenté à la figure 1 comprend un bâti 10 dans lequel est disposé sur une colonne 11 un réservoir 12 contenant un liquide d'usinage ou liquide diélectrique. Dans ce réservoir, une pièce à usiner 14 est fixée sur une table 15.

La partie supérieure du bâti 10 présente deux rails 20 sur lesquels est monté un support 21 susceptible de coulisser suivant une direction y et entraîné grâce à un moteur 22. Un chariot 23 est monté coulissant sur le support 21 suivant une direction x et entraîné à cet effet par un moteur 24.

Un organe porte-outil 27 est agencé de façon coulissante suivant une direction z dans le chariot 23 et entraîné verticalement grâce à un moteur 28. L'organe porte-outil 27 comprend une broche rotative motorisée 30 dans laquelle est maintenue de façon amovible une électrode-outil 31 de forme cylindrique tubulaire. Grâce à cet agencement, on obtient des mouvements de translation relatifs suivant les trois dimensions x, y, z, entre la pièce à usiner 14 et l'électrode-outil rotative 31 dont le diamètre est petit par rapport aux dimensions de la surface à usiner ou de la cavité à éroder.

Un circuit électrique CG est relié galvaniquement à l'électrode-outil 31 et à la pièce à usiner 14 et agencé pour amorcer et entretenir des décharges érosives entre l'électrode-outil 31 et la pièce 14.

Une unité de commande CPU comprend à cet effet un module électronique de commande CE permettant de contrôler les paramètres des différents composants électriques du circuit électrique CG.

L'unité de commande englobe également un module de commande numérique CN destiné à contrôler les mouvements tridimensionnels relatifs entre l'électrode-outil 31 et la pièce à usiner 14 et agencé de façon à envoyer des signaux de commande correspondant aux trois moteurs 22, 24, 28.

Un module informatique MI qui peut être englobé dans l'unité de commande CPU permet d'enregistrer les formes géométriques qui devront être menées à partir de la pièce sous forme d'une superposition de couches virtuelles 33. L'épaisseur de ces couches 33 peut varier entre quelques millimètres pour l'usinage en ébauche et quelques micromètres pour la finition.

Reliée au module précédent, l'unité de commande CPU comprend un module de simulation MS agencé d'une part pour simuler une trajectoire de l'élecrode-outil 31 telle que l'extrémité de cette dernière balaye sillon par sillon, successivement chacune des couches virtuelles et, d'autre part, pour transmettre des signaux de commande correspondants vers le module de commande numérique CN afin d'effectuer ce balayage couche par couche. Ce module de simulation MS, ainsi que le module informatique peuvent être intégrés dans un logiciel CAD/CAM dont plusieurs types sont connus, comme celui commercialisé par la société CN Industries, 254 rue Francis de Pressensé, F - 69625 Villeurbanne - CEDEX.

L'unité de commande comprend en outre un module de régulation MR qui permet d'une part de simuler l'usure longitudinale de l'électrode-outil 31 et sa compensation le long de sa trajectoire et, d'autre part, de transmettre vers le module de commande numérique CN des signaux de compensation de façon à régler et compenser cette usure longitudinale pour maintenir le mouvement de l'extrémité de l'électrode-outil 31 parallèle audites couches 33. On a intérêt avec ce type d'usinage à "fraisage EDM" par couche à usiner avec un régime à forte usure, en général avec un taux volumique de 20 à 50%, car cela favorise l'apparition très rapide de la forme asymptotique de l'extrémité de l'électrode-outil 31 et avec une vitesse de rotation élevée pouvant atteindre plusieurs milliers de tours par minute. Néanmoins l'utilisation de régimes à usure faible reste évidemment possible selon les cas d'application, par exemple pour des corrections d'erreurs de planéité par des couches minces.

La technique générale de ce type d'usinage à fraisage EDM par électrode-outil rotative est en particulier décrite dans les documents EP 0 555 818, CH 689 182 et US 5 911 888 au nom de la déposante et dont le contenu fait partie intégrante de la présente demande.

Conformément à la présente invention le module de régulation MR est agencé pour prévoir plusieurs valeurs de l'usure longitudinale de l'électrode-outil 31 selon le type de configuration géométrique mutuelle entre l'électrode-outil et la matière environnante de la pièce à usiner et pour transmettre des signaux de compensation d'usure correspondant à chacune de ces valeurs vers le module de commande numérique CN.

Ces valeurs de l'usure longitudinale ou volumique tiennent en particulier compte de la configuration géométrique de l'écoulement du liquide d'usinage entre l'électrode-outil 31 et la pièce à usiner 14. L'invention consiste en particulier à choisir des situations typiques à l'intérieur desquelles lés conditions d'écoulement du liquide d'usinage restent sensiblement constantes en raison de la topologie locale. Dans les dispositifs connus, une seule valeur de l'usure longitudinale était prévue pour toute la superficie d'une couche. Au contraire le dispositif selon la présente invention prévoit des valeurs différentes de l'usure longitudinale ou volumique et de sa compensation pour chaque région géométrique, segment ou zone selon la configuration géométrique entre l'électode-outil et la matière environnante de la pièce. En outre, pour ces différents cas de figures d'autres paramètres d'usinage particuliers pourront être prévus, par exemple des régimes d'usinage différents, des gaps différents, des rugosités différentes, etc.

Ainsi le module de régulation MR est agencé de façon à tenir compte, lors de la simulation et de l'établissement des valeurs de l'usure longitudinale

a) de la présence ou de l'absence d'une ouverture dans la matière environnante située en-dessous de l'extrémité de l'électrode-outil 31 facilitant l'écoulement du liquide d'usinage et

b) de la présence ou de l'absence d'au moins une ou deux parois de la matière environnante située à une distance de l'électrode-outil qui est plus petite qu'une première distance prédéterminée.

Dans le présent mode d'exécution, l'électrode-outil est sous forme d'un tube creux pourvu d'un alésage axial et les valeurs de l'usure longitudinale tiennent compte de la présence ou de l'absence d'une communication pour le liquide d'usinage entre cet alésage axial et une ouverture dans la matière environnante.

Ainsi le module de régulation est agencé de façon à prévoir une valeur de l'usure longitudinale pour chacune des configurations géométriques 1 à 6 suivantes, à savoir

| ouverture paroi | absence d'ouverture | présence d'ouverture |
|---|---|---|
| présence de 2 parois parallèles | 1. configuration | 2. configuration |
| présence d'une paroi | 5. configuration | 4. configuration |
| absence de paroi | 6. configuration | 3. configuration |

où la présence d'une paroi signifie que cette dernière est située à une distance inférieure ou égale à une première distance d1 prédéterminée de l'électrode-outil; et où la présence de deux parois signifie que les deux parois sont éloignées d'une distance inférieure ou égale à une seconde distance maximale prédéterminée d2.

La première distance prédéterminée d1 pourrait être fixée à

$$d1 = g$$

et la seconde distance maximale prédéterminée à

$$d2 = 2(R + g)$$

où
R est le rayon extérieur de l'électrode-outil,
g est le gap.

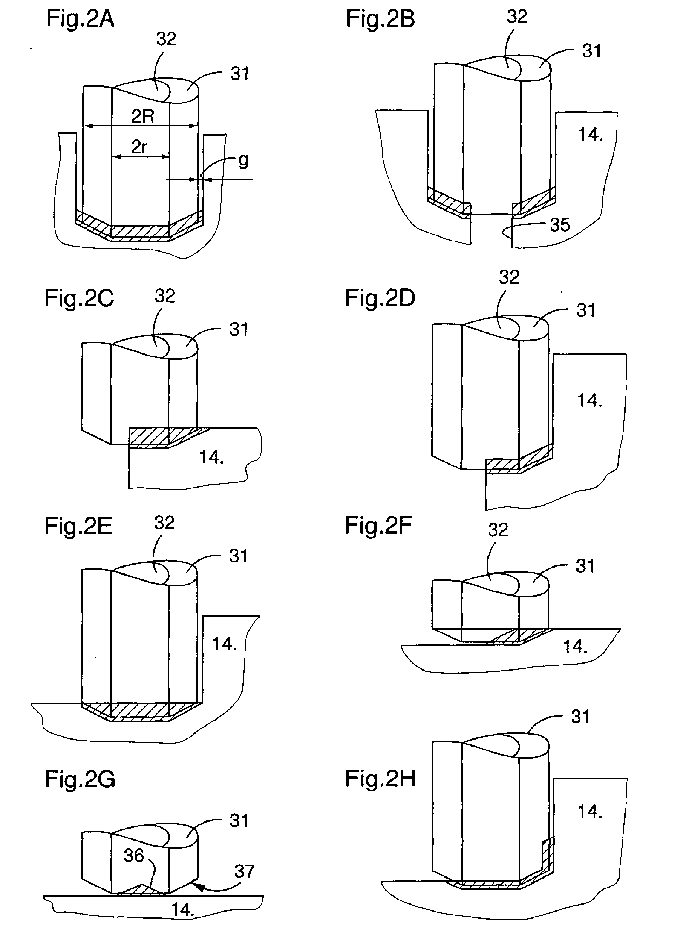

Ces six configurations géométriques et deux configurations géométriques supplémentaires sont représentées aux figures 2A à 2H.

La première configuration illustrée à la figure 2A correspond à une rainure étroite bouchée. L'électrode-outil usine à proximité immédiate de deux parois de la pièce de part et d'autre. En outre, l'alésage axial 32 de l'électrode-outil se trouve fermé ou bouché par le fond de la couche. La matière enlevée lors de l'usinage est indiquée en hachuré. Les deux parois de la rainure sont séparées par une distancé 2 (R + g).

En variante la rainure pourrait également avoir une distance plus large, par exemple inférieure ou égale à 2 (R + r + g), ce qui correspond à une rainure obtenue par un aller et retour de l'électrode-outil avec un décalage de 2r entre l'aller et le retour, 2r étant le diamètre intérieur de l'électrode-outil. Ce cas de figure correspond à une rainure large et constitue un cas intermédiaire avec la cinquième configuration.

La seconde configuration (fig. 2B) est similaire à la précédente avec la différence que l'alésage axial 32 communique avec une ouverture ou fente 35 préexistante dans la pièce à usiner 14.

La troisième configuration illustrée à la figure 2C correspond à un bord du brut débouché. Il n'y a pas de paroi au voisinage de l'électrode-outil 31 qui usine avec l'alésage axial débouché au bord de la pièce brute.

La quatrième configuration représentée à la figure 2D correspond au bord de la pièce débouchée. L'électrode-outil 31 usine avec l'alésage axial débouché contre une paroi de la pièce finie.

La cinquième configuration (fig. 2E) correspond au cas bord de la pièce bouchée. L'électrode-outil 31 usine contre un bord de la pièce finie tout en ayant son alésage axial fermé, bouché.

La sixième configuration représentée à la figure 2F correspond au cas d'un balayage d'une surface. L'alésage axial 32 est fermé, bouché et l'électrode-outil 31 balaye les régions éloignées, d'une part vers l'intérieur du pourtour du brut de la pièce 14 et d'autre part vers l'extérieur du pourtour de la pièce finie.

Une septième configuration correspond aux restes ou résidus intermédiaires. L'électrode-outil 31 usine des monticules 36 de matière laissée éventuellement à la frontière des configurations précédentes. Ces restes proviennent notamment dans certains modes d'exécution du fait que les calculs de parcours de l'électrode-outil sont faits pour un outil cylindrique, alors que dans la réalité l'électrode-outil présente après une courte phase initiale une partie frontale tronconique 37.

La huitième configuration concerne le cas d'une finition dans laquelle l'électrode-outil 31 parcourt le bord de la pièce avec un décalage latéral réduit, et ceci avec un régime d'usinage plus fin dans le but d'ôter la rugosité du régime précédent. Il faut noter qu'il n'est pas nécessaire pour cette configuration de distinguer un fonctionnement bouché versus débouché. Ce n'est pas le fond de la couche qui est visé mais seulement la partie latérale de la couche en cours. D'une part l'erreur d'altitude est sans importance, d'autre part le volume à usiner est négligeable. Par suite les fluctuations d'altitudes dues aux variations d'usure volumétrique sont également négligeables.

Ainsi le module de régulation MR présentera huit valeurs différentes de l'usure longitudinale de l'électrode-outil. Le module de simulation MS est agencé pour déterminer pour chaque couche à usiner la localisation des différentes zones, régions ou segments, à l'intérieur desquels une configuration donnée est présente. Ainsi les modules de simulation et de régulation sont programmés pour commander une trajectoire de l'électrode-outil dans ces zones, régions ou segments en appliquant une valeur donnée de l'usure longitudinale correspondant à chaque configuration géométrique pour obtenir une compensation exacte de l'usure réelle de l'électrode-outil.

Dans le mode d'exécution présenté les modules de simulation et de régulation sont programmés pour effectuer l'usinage des zones de chaque couche dans l'ordre croissant en partant de la première jusqu'à la dernière configuration. Toutefois, afin de simplifier la programmation, si nécessaire, on peut se permettre de permuter les cinq premières configurations pourvu que les trois dernières conservent leur place dans la séquence. Un tel compromis fournira des résultats géométriques moins bons évidemment.

En outre le module de régulation MR est agencé pour commencer l'usinage avec des valeurs pré-établies de l'usure longitudinale ou volumique pour chacune des configurations géométriques. On effectue ensuite des mesures de l'usure longitudinale réelle pour chacune des configurations géométriques et on remplace les valeurs pré-établies par les valeurs mesurées de l'usure longitudinale. Le dispositif d'usinage par électroérosion comprend à cet effet un organe de mesure 29 permettant de mesurer la longueur et donc l'usure réelle de l'électrode-outil 31. Cet organe de mesure 29 pourra être de tous types optique, mécanique, électrique, etc. La mesure de cette longueur et de l'usure réelle de l'électrode-outil peut être effectuée périodiquement, par exemple une fois par couche pour chaque zone ou configuration géométrique.

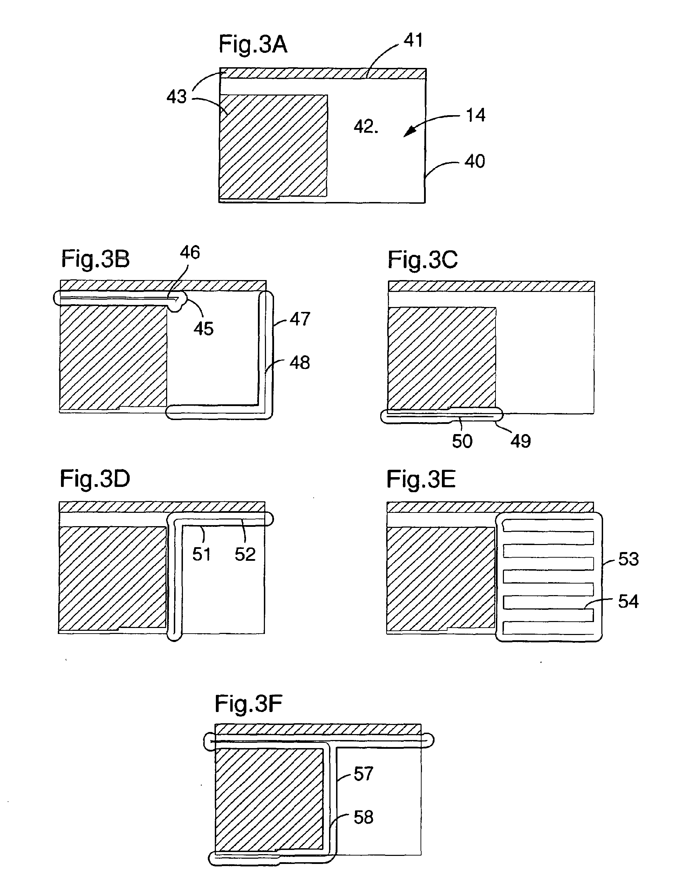

Les figures 3A à 3F illustrent la simulation et l'exécution des parcours de l'électrode-outil lors de l'usinage en différentes étapes d'une couche de matière en usinant les zones à configuration croissante et en partant de la première configuration jusqu'à la huitième configuration.

La figure 3A montre une couche de la pièce à usiner avec le contour 40 du brut et le contour 41 de la pièce séparant les surfaces à usiner 42 et les surfaces restantes 43 qui ne seront pas usinées en hachuré.

A la figure 3B, on a indiqué une première zone 45 correspondant à la première configuration géométrique de rainure bouchée et le parcours 46 du centre de l'électrode-outil pour usiner cette première zone 45. Comme la pièce à usiner ne présente pas de rainure débouchée, il n'existe pas de seconde zone correspondant à la seconde configuration géométrique.

Par contre la figure 3B montre une troisième zone 47 correspondant à la troisième configuration géométrique de bord du brut débouché et le parcours 48 du centre de l'électrode-outil pour usiner cette troisième zone 47 en appliquant bien entendu la valeur correspondante de l'usure longitudinale.

A la figure 3C, on a représenté une quatrième zone 49 correspondant à la quatrième configuration géométrique de bord de pièce débouché, ainsi que le parcours 50 du centre de l'électrode-outil pour usiner cette quatrième zone 49 en appliquant la valeur correspondante de l'usure longitudinale.

La figure 3D montre une cinquième zone 51 caractérisée par la cinquième configuration géométrique de bord de pièce bouché et le parcours 52 du centre de l'électrode-outil pour usiner cette cinquième zone en appliquant la valeur correspondante de l'usure longitudinale.

On usine ensuite la sixième zone 53 présentant la sixième configuration géométrique de balayage avec un parcours 54 du centre de l'électrode-outil et une valeur de l'usure longitudinale correspondant au balayage (fig. 3E).

Il resterait à effectuer l'usinage d'une septième zone correspondant à la septième configuration d'usinage des restes. Mais dans l'exemple choisi le recouvrement entre les zones 51 et 53 ayant été programmé suffisamment grand, les monticules de matières correspondant à la septième configuration ne subsistent pas. Il n'est donc pas nécessaire de générer un parcours du centre de l'électrode-outil.

Finalement un usinage de finition est effectué conformément à la huitième zone 57 avec un parcours 58 du centre de l'électrode-outil et une valeur très faible de l'usure longitudinale correspondant à des conditions de finition (fig. 3F).

La simulation et l'usinage de cette couche sont alors terminés et on pourra procéder de façon similaire pour la prochaine couche à usiner.

Il est bien entendu que le mode de réalisation décrit ci-dessus ne présente aucun caractère limitatif et qu'il peut recevoir toute modification désirable à l'intérieur du cadre tel que défini par la revendication 1. En particulier, le dispositif à électroérosion pourrait présenter une toute autre construction avec par exemple un bâti en U. Les mouvements relatifs suivant les directions x, y, z pourraient être effectués entièrement ou partiellement par une table sur laquelle la pièce 14 est montée.

Les modules informatiques et de simulation pourront être localisés à un autre endroit; le résultat de la simulation sera alors chargé dans l'unité de commande CPU avant et/ou pendant l'usinage.

Les modules informatiques, de simulation et de régulation et le module de commande numérique pourront également être combinés en un seul module interactif chargé dans un ordinateur de contrôle.

Le nombre et la définition des configurations géométriques pourraient être modifiés. Ainsi pourrait-on ajouter des configurations supplémentaires formant des cas intermédiaires entre les configurations géométriques décrites. Selon des variantes d'implémentation, on pourra également être conduit pour simplifier à réunir deux configurations géométriques dans une configuration unique, par exemple la seconde et la quatrième configurations. Evidemment la précision de la planéité s'en ressentira, mais cette simplification suivant l'application peut être acceptable comme compromis.

A l'inverse, on pourra définir deux ou plusieurs variantes de configurations géométriques en partant d'une configuration géométrique typique; par exemple les troisième et quatrième configurations pourront être différenciées en deux gammes de décalage latérales.

Les valeurs des premières et secondes distances d1, d2 pourront être différentes.

D'autres configurations géométriques pourraient être ajoutées, telle que la présence d'une paroi oblique etc.

Les zones, régions ou segments caractérisés par une configuration géométrique donnée pourront être délimités grâce à différents programmes de traitement d'image. Les parcours de l'électrode-outil établis par le module de simulation pourront être obtenus par tout autre programme informatique. Ces parcours pourront être limités chacun à une zone donnée ou au contraire passer à travers différentes zones. La valeur de l'usure longitudinale de l'électrode-outil sera cependant adaptée et modifiée à chaque fois que l'on pénètre dans une autre zone et configuration géométrique. En outre, la succession chronologique de l'usinage des différentes zones et configurations géométriques pourra être différente et adaptée à la géométrie générale du brut et des formes à éroder de la pièce.

Dans un mode de réalisation plus perfectionné de l'invention on prévoiera que l'outil balaye l'ensemble de la surface d'une couche de proche en proche, comme si l'ensemble de la couche ne constituait en apparence qu'une seule et unique zone.

Le découpage en zones distinctes n'apparaîtra pas en observant l'usinage de la pièce mais seulement au niveau de la commande numérique où l'on verra les paramètres du régulateur changer instantanément lors du passage de la frontière entre deux zones adjacentes.

## Revendications

**1.** Procédé pour usiner une pièce (14) à trois dimensions par fraisage au moyen d'un dispositif à électroérosion selon lequel

- on entraîne en rotation une électrode-outil (31) de forme cylindrique dont le diamètre (2R) est petit par rapport aux dimensions des surfaces à éroder,
- on contrôle au moyen d'une unité de commande numérique (CN) le mouvement tridimensionnel (x, y, z) relatif entre l'électrode-outil (31) et ladite pièce (14),
- on enregistre grâce à des moyens informatiques (MI) les formes à usiner sous forme d'une superposition de couches virtuelles (33),
- on simule une trajectoire de l'électrode-outil (31) telle que cette dernière balaye sillon par sillon, successivement chacune des couches virtuelles, et on transmet des signaux de commande correspondants vers l'unité de commande numérique (CN) pour effectuer l'usinage par couche,
- on simule grâce à des moyens de régulation (MR) l'usure longitudinale de l'électrode-outil le long de sa trajectoire et on transmet des signaux de compensation correspondants vers l'unité de commande numérique (CN) de façon à compenser cette usure longitudinale et à maintenir le mouvement de l'extrémité de l'électrode-outil parallèle auxdites couches (33) en prévoyant plusieurs valeurs pour l'usure longitudinale de l'électrode-outil (31) selon la configuration géométrique mutuelle entre l'électrode-outil (31) et la matière environnante de ladite pièce (14) et en transmettant des signaux de compensation correspondant à chacune de ces valeurs vers l'unité de commande numérique (CN), **caractérisé par le fait que** lesdites valeurs tiennent compte de la configuration géométrique de l'écoulement entre l'électrode-outil (31) et la matière environnante d'un liquide d'usinage utilisé pour l'usinage.

**2.** Procédé selon la revendication 1, **caractérisé par le fait que** lesdites valeurs tiennent compte d'une part de la présence ou de l'absence d'une ouverture dans la matière environnante située en-dessous de l'extrémité de l'électrode-outil facilitant l'écoulement du liquide d'usinage et d'autre part de la présence ou de l'absence d'au moins une ou deux parois de la matière environnante situées à une distance de l'électrode-outil (31) qui est plus petite qu'une première distance prédéterminée.

3. Procédé selon la revendication 2, **caractérisé par le fait que** l'on utilise une électrode-outil (31) sous forme d'un tube creux pourvu d'un alésage axial (32) et **par le fait que** lesdites valeurs tiennent compte de la présence ou de l'absence d'une communication entre l'alésage axial (32) et ladite ouverture (35) dans la matière environnante.

4. Procédé selon la revendication 2 ou 3, **caractérisé par le fait que** l'on fixe des valeurs de l'usure longitudinale pour les configurations géométriques suivantes :

- une première configuration (fig. 2A) définie par la présence d'au moins deux parois éloignées d'une distance inférieure à une seconde distance maximale prédéterminée et par l'absence d'ouverture sous l'électrode-outil
- une seconde configuration (fig. 2B) définie par la présence d'au moins deux parois éloignées d'une distance inférieure à la seconde distance maximale prédéterminée et par la présence d'une ouverture sous l'électrode-outil;
- une troisième configuration (fig. 2C) définie par l'absence de paroi située à une distance inférieure à la première distance prédéterminée de l'électrode-outil et la présence d'une ouverture sous l'électrode-outil;
- une quatrième configuration (fig. 2D) définie par la présence d'une paroi située à une distance inférieure à la première distance prédéterminée de l'électrode-outil et la présence d'une ouverture sous l'électrode-outil;
- une cinquième configuration (fig. 2E) définie par la présence d'une paroi située à une distance inférieure à la première distance prédéterminée et l'absence d'ouverture sous l'électrode-outil;
- une sixième configuration (fig. 2F) définie par l'absence de paroi située à une distance inférieure à la première distance prédéterminée et par l'absence d'ouverture sous l'électrode-outil.

5. Procédé selon la revendication 4, **caractérisé par le fait que** l'on fixe en outre des valeurs de l'usure longitudinale pour les configurations suivantes:

- une septième configuration (fig. 2G) pour usiner la matière laissée à la frontière des configurations géométriques précédentes et entre ces dernières;
et
- une huitième configuration (fig. 2H) pour effectuer un ou plusieurs usinages de finition.

6. Procédé selon la revendication 4 ou 5, **caractérisé par le fait que** l'on détermine à l'aide des moyens de simulation (MS) pour chaque couche différentes zones ou régions d'usinage à l'intérieur desquelles il existe une desdites configurations géométriques et que l'on simule et/ou que l'on effectue une trajectoire de l'électrode-outil (31) dans ces zones ou régions d'usinage en appliquant les valeurs de l'usure longitudinale correspondant auxdites configurations géométriques.

7. Procédé selon la revendication 6, **caractérisé par le fait que** l'on effectue l'usinage des zones ou régions d'usinage dans l'ordre croissant en partant dé ladite première configuration jusqu'à la dernière configuration géométrique en gardant la liberté de permuter les cinq premières configurations seulement.

8. Procédé selon l'une des revendications 1 à 3, **caractérisé par le fait que** l'on détermine pour chaque couche différentes zones ou régions d'usinage à l'intérieur desquelles il existe une configuration géométrique donnée, que l'on simule et/ou que l'on effectue avec l'outil un balayage de la surface d'une couche et que l'on change de signaux de compensation à chaque fois que l'outil entre dans une zone ou région d'usinage différente.

9. Procédé selon l'une des revendications précédentes, **caractérisé par le fait que** l'on fixe pour chacune des configurations géométriques une valeur de l'usure longitudinale en usinant avec des valeurs pré-établies, en mesurant l'usure longitudinale réelle pour les configurations géométriques et en remplaçant les valeurs pré-établies par les valeurs mesurées de l'usure longitudinale

10. Dispositif d'usinage par électroérosion pour usiner une pièce (14) à trois dimensions par fraisage par électroérosion par couches, comprenant

- un organe pour entraîner en rotation une électrode-outil (31) de forme cylindrique dont le diamètre (R) est petit par rapport aux dimensions des surfaces à éroder,
- une unité de commande numérique (CN) destinée à contrôler le mouvement tridimensionnel relatif entre l'électrode-outil (31) et la pièce (14),
- un module informatique (MI) permettant d'enregistrer les formes à usiner sous forme d'une superposition de couches virtuelles,
- un module de simulation (MS) permettant de simuler une trajectoire de l'électrode-outil (31) telle que cette dernière balaye sillon par sillon, successivement chacune des couches virtuelles (33) et agencé pour transmettre des signaux de commande correspondants vers l'unité de commande numérique (CN),
- un module de régulation (MR) permettant de simuler l'usure longitudinale de l'électrode-outil et sa compensation le long de sa trajectoire et de transmettre vers l'unité de commande numérique (CN) des signaux de compensation de façon à régler et compenser cette usure longitudinale pour maintenir le mouvement de l'extrémité de l'électrode-outil parallèle auxdites couches, le module de régulation (MR) étant agencé pour prévoir plusieurs valeurs de l'usure longitudinale de l'électrode-outil selon la configuration géométrique mutuelle entre l'électrode-outil (31) et la matière environnante de la pièce (14) et pour transmettre des signaux de compensation correspondant à chacune de ces valeurs vers l'unité de commande numérique (CN), **caractérisé par le fait que** le module de régulation (MR) est agencé pour prévoir plusieurs valeurs de l'usure longitudinale en tenant compte de la configuration géométrique de l'écoulement entre l'électrode-outil (31) et la matière environnante d'un liquide d'usinage utilisé pour l'usinage.

**11.** Dispositif selon la revendication 10, **caractérisé par le fait que** le module de régulation (MR) est agencé de façon à tenir compte, lors de la simulation des valeurs de l'usure longitudinale, d'une part de la présence ou de l'absence d'une ouverture dans la matière environnante située en-dessous de l'extrémité de l'électrode-outil (31) facilitant l'écoulement du liquide d'usinage et d'autre part de la présence ou de l'absence d'au moins une ou deux parois de la matière environnante situées à une distance de l'électrode-outil (31) qui est plus petite qu'une première distance prédéterminée.

**12.** Dispositif selon la revendication 11, **caractérisé par le fait que** l'électrode-outil (31) est sous forme d'un tube creux pourvu d'un alésage axial (32) et **par le fait que** lesdites valeurs de l'usure longitudinale tiennent compte de la présence ou de l'absence d'une communication entre l'alésage axial et ladite ouverture (35) dans la matière environnante.

**13.** Dispositif selon la revendication 11 ou 12, **caractérisé par le fait que** le module de régulation (MR) est agencé de façon à prévoir une valeur de l'usure longitudinale pour chacune des configurations géométriques 1 à 6, à savoir

| ouverture paroi | absence d'ouverture | Présence d'ouverture |
|---|---|---|
| présence de 2 parois parallèles | 1. configuration | 2. configuration |
| présence d'une paroi | 5. configuration | 4. configuration |
| absence de paroi | 6. configuration | 3. configuration |

où la présence d'une paroi signifie que cette dernière est située à une distance inférieure ou égale à une première distance prédéterminée de l'électrode-outil;
et où la présence de deux parois signifie que les deux parois sont éloignées d'une distance inférieure ou égalé à une seconde distance maximale prédéterminée.

**14.** Dispositif selon la revendication 13, **caractérisé par le fait que** le module de régulation (MR) est en outre agencé pour prévoir une valeur de l'usure longitudinale pour les configurations suivantes :

- 7. configuration pour usiner la matière laissée à la frontière des configurations géométriques précédentes et entre ces dernières; et
- 8. configuration pour effectuer un ou plusieurs usinages de finition.

**15.** Dispositif selon la revendication 13 ou 14, **caractérisé par le fait que** le module de simulation (MS) est agencé de façon à déterminer pour chaque couche différentes zones ou régions d'usinage à l'intérieur desquelles il existe une desdites configurations géométriques et que les modules de simulation et de régulation (MS, MR) sont agencés pour simuler et/ou pour commander une trajectoire de l'électrode-outil dans ces zones ou régions d'usinage en appliquant les valeurs de l'usure longitudinale correspondantes auxdites configurations géométriques.

**16.** Dispositif selon la revendication 15, **caractérisé par le fait que** les modules de simulation et de régulation (MS, MR) sont agencés pour effectuer l'usinage des zones ou régions d'usinage dans l'ordre croissant en partant de la 1. configuration jusqu'à la dernière configuration.

**17.** Dispositif selon l'une des revendications 10 à 16, **caractérisé par le fait que** le module de régulation (MR) est agencé pour commencer l'usinage avec des valeurs pré-établies de l'usure longitudinale, pour mesurer l'usure longitudinale réelle pour chacune des configurations géométriques et pour remplacer les valeurs pré-établies par les valeurs mesurées de l'usure longitudinale.

**Claims**

**1.** Process to machine a three-dimensional piece (14) by milling with an electroerosion device, according to which

- an electrode-tool (31) of cylindrical shape whose diameter (2R) is small relative to the dimensions of the surfaces to be eroded, is driven in rotation,
- the three-dimensional relative movement (x, y, z) between the electrode-tool (31) and said piece (14) is controlled by means of a digital control unit (CN),
- there are recorded by computer means (MI) the shapes to be machined in the form of a superposition of virtual layers (33),
- a path of an electrode-tool (31) is simulated, such that this latter sweeps groove by groove, successively, each of the virtual layers, and the corresponding control signals are transmitted toward the digital control unit (CN) to carry out machining layerwise,
- by regulation means (MR), the longitudinal wear of the electrode-tool along its trajectory is simulated and corresponding compensation signals are transmitted to the digital control unit (CN) so as to compensate this longitudinal weal and to maintain the movement of the end of the electrode-tool parallel to said layers (33), by providing several values for longitudinal wear of the electrode-tool (31) according to the mutual geometric configuration between the electrode-tool (31) and the nearby material of said piece (14) and that values of compensation signals corresponding to each of these values are transmitted to the digital control unit (CN) **characterized by** the fact that said values take account of the geometric configuration of the flow between the electrode-tool (31) and the nearby material, of a machining liquid used for machining.

**2.** Process according to claim 1, **characterized by** the fact that said values take account on the one hand of the presence or absence of an opening in the nearby material located below the end of the electrode-tool facilitating the flow of the machining liquid, and on the other hand of the presence or absence of at least one or two walls of the nearby material located at a distance from the electrode-tool (31) which is smaller than a first predetermined distance.

**3.** Process according to claim 2, **characterized by** the fact that an electrode-tool (31) is used which is in the form of a hollow tube provided with an axial bore (32) and by the fact that said values take account of the presence or absence of communication between the axial bore (32) and said opening (35) in the nearby material.

**4.** Process according to claim 2 or 3, **characterized by** the fact that values of longitudinal wear are fixed for the following geometric configurations:

- a first configuration (fig. 2A) defined by the presence of at least two walls spaced by a distance less than a second maximum predetermined distance and by the absence of an opening below the electrode-tool;
- a second configuration (fig. 2B) defined by the presence of at least two walls spaced by a distance less than the second maximum predetermined distance and by the presence of an opening below the electrode-tool;
- a third configuration (fig. 2C) defined by the absence of a wall located at a distance less than the first predetermined distance of the electrode-tool and the presence of an opening below the electrode-tool;
- a fourth configuration (fig. 2D) defined by the presence of a wall located at a distance less than the first predetermined distance from the electrode-tool and the presence of an opening below the electrode-tool;
- a fifth configuration (fig. 2E) defined by the presence of a wall located at a distance less than the first predetermined distance and the absence of an opening below the electrode-tool;
- a sixth configuration (fig. 2F) defined by the absence of a wall located at a distance less than the first predetermined distance and by the absence of an opening below the electrode-tool.

**5.** Process according to claim 4, **characterized by** the fact that moreover the values of longitudinal wear are fixed for the following configurations:

- a seventh configuration (fig. 2G) to machine the material left at the margins of the preceding geometric configurations and between these latter; and
- an eighth configuration (fig. 2H) to carry out one or several finishing machinings.

**6.** Process according to claim 4 or 5, **characterized by** the fact that there is determined with the help of simulation means (MS) for each layer, different zones or regions of machining within which there exist one of said geometric configurations and that there is simulated and/or carried out a path of the electrode-tool (31) in the zones or regions of machining by using the values of longitudinal wear corresponding to said geometric configurations.

**7.** Process according to claim 6, **characterized by** the fact that there is carried out machining of the zones or regions of machining in increasing order starting from said first configuration until the last geometric configuration while preserving the freedom of rearranging the five first configurations only.

**8.** Process according to one of claims 1 to 3, **characterized by** the fact that there is determined for each layer, different zones or regions of machining within which there exists a given geometric configuration, that there is simulated and/or carried out with the tool a sweeping of the surface of a layer and that the compensation signals are changed each time the tool enters a different zone or region of machining.

**9.** Process according to one of the preceding claims, **characterized by** the fact that there is fixed for each of the geometric configurations a value of longitudinal wear, by machining with pre-established values, by measuring the real longitudinal wear for the geometric configurations, and by replacing the pre-established values measured values of longitudinal wear.

**10.** Device for machining by electroerosion to machine a piece (14) with three dimensionings by layerwise electroerosion milling, comprising

- a member to drive in rotation an electrode-tool (31) of cylindrical shape whose diameter (R) is small relative to the dimensions of the surfaces to be eroded,
- a digital control unit (CN) adapted to control the relative three-dimensional movement between the electrode tool (31) and the piece (14),
- a computer module (MI) permitting recording the shapes to be machined in the form of a superposition of virtual layers,
- a simulation module (MS) permitting simulating a path of the electrode-tool (31) such that this latter sweeps groove by groove, successively each of the virtual layers (33) and arranged to transmit corresponding control signal to the digital control unit (CN),
- a regulation module (MR) permitting simulating the longitudinal wear of the electrode-tool and its compensation along its path and to transmit toward the digital control unit (CN) compensation signals such as to regulate and compensate this longitudinal wear to maintain the movement of the end of the electrode-tool parallel to said layers, said regulation module (MR) being arranged to provide several values of longitudinal wear of the electrode-tool according to the mutual geometric configuration between the electrode-tool (31) and the nearby material of the piece (14) and to transmit compensation signals corresponding to each of these values to the digital control unit (CN) by the fact that the regulation module (MR) is arranged to provide several values of longitudinal wear taking account of the geometric configuration of the flow between the electrode-tool (31) and the nearby material, of a machining liquid used for machining.

**11.** Device according to claim 10, **characterized by** the fact that the regulation module (MR) is arranged so as to take account, during simulation of the values of longitudinal machining, on the one hand of the presence or absence of an opening in the nearby material located below the end of the electrode-tool (31) facilitating the flow of the machining liquid, and on the other hand of the presence or absence of at least one or two walls of the nearby material located at a distance from the electrode-tool (31) which is smaller than a first predetermined distance.

**12.** Device according to claim 11, **characterized by** the fact that the electrode-tool (31) is in the form of a hollow tube provided with an axial bore (32) and by the fact that said values of longitudinal wear take account of the presence or absence of communication between the axial bore and said opening (35) in the nearby material.

**13.** Device according to claim 11 or 12, **characterized by** the fact that the regulation module (MR) is arranged so as to provide a value of longitudinal wear for each of the geometric configurations 1 to 6, namely

| opening / wall | absence of opening | presence or opening |
|---|---|---|
| presence of two parallels walls | 1. configuration | 2. configuration |
| presence of one wall | 5. configuration | 4. configuration |
| absence of a wall | 6. configuration | 3. configuration |

in which the presence of a wall signifies that this latter is located at a distance less than or equal to a first predetermined distance from the electrode-tool; and in which the presence of two walls signifies that the two walls are spaced by a distance less than or equal to a second maximum predetermined distance.

**14.** Device according to claim 13, **characterized by** the fact that the regulation module (MR) is moreover arranged to provide a value of longitudinal wear for the following configurations:

- 7. configuration to machine the material left at the edge of the preceding geometric configuration and between these latter; and
- 8. configuration to carry out one or several finishing machinings.

**15.** Device according to claim 13 or 14 **characterized by** the fact that the simulation module (MS) is arranged so as to determine for each layer different zones or regions of machining within which there exists one of said geometric configurations and that the simulation and regulation modules (MS, MR) are arranged to simulate and/or to control a path of the electrode-tool in these zones or regions of machining by applying the values of longitudinal wear corresponding to said geometric configurations.

**16.** Device according to claim 15, **characterized by** the fact that the simulation and regulation modules (MS, MR) are arranged to carry out machining of the zones or regions of machining in increasing order starting from the first configuration to the last configuration.

**17.** Device according one of the claims 10 to 16, **characterized by** the fact that the regulation module (MR) is arranged to begin machining with pre-established values of longitudinal wear, to measure the real longitudinal wear for each of the geometric configurations, and to replace the pre-established values by the measured values of longitudinal wear.

**Patentansprüche**

**1.** Verfahren zum Bearbeiten eines dreidimensionalen Werkstücks (14) durch Fräsen mittels einer Funkenerosionsvorrichtung, dem zufolge

- eine Werkzeugelektrode (31) zylindrischer Gestalt, deren Durchmesser (2R) im Verhältnis zu den Dimensionen der zu erodierenden Oberfläche klein ist, in Drehung versetzt wird,
- die dreidimensionale Relativbewegung (x, y, z) zwischen der Werkzeugelektrode (31) und dem Werkstück (14) durch eine digitale Steuereinheit (CN) gesteuert wird,
- die herauszuarbeitenden Formen in Gestalt einer Überlagerung virtueller Schichten (33) durch Informatikmittel (MI) aufgezeichnet werden,
- eine Bahn der Werkzeugelektrode (31) derart simuliert wird, dass die Elektrode Streifen um Streifen jede der virtuellen Schichten in Folge überstreicht, und entsprechende Steuersignale zur digitalen Steuereinheit (CN) übermittelt werden, um die schichtenweise Bearbeitung auszuführen,

- die Längsabnutzung der Werkzeugelektrode entlang ihrer Bahn durch Reguliermittel (MR) simuliert wird und entsprechende Ausgleichssignale derart zur digitalen Steuereinheit (CN) übermittelt werden, dass diese Längsabnutzung kompensiert und die Bewegung des Endes der Werkzeugelektrode parallel zu den Schichten (33) gehalten wird, indem je nach der gegenseitigen geometrischen Konfiguration der Werkzeugelektrode (31) und des das Werkstück (14) umgebenden Materials mehrere Werte für die Längsabnutzung der Werkzeugelektrode (31) vorgesehen und jedem dieser Werte entsprechende Ausgleichssignale zur digitalen Steuereinheit (CN) übermittelt werden, **dadurch gekennzeichnet, dass** diese Werte die geometrische Konfiguration des Flusses einer für die Bearbeitung verwendeten Bearbeitungsflüssigkeit zwischen der Werkzeugelektrode (31) und dem umgebenden Material berücksichtigen.

2. Verfahren nach Anspruch 1, **dadurch gekennzeichnet, dass** die Werte einerseits das Vorhandensein oder Nichtvorhandensein einer Öffnung im umgebenden Material unterhalb des Endes der Werkstückelektrode, die den Fluss der Bearbeitungsflüssigkeit erleichtert, und andererseits das Vorhandensein oder Nichtvorhandensein zumindest einer oder zweier Wände des umgebenden Materials berücksichtigen, die sich in einem Abstand von der Werkzeugelektrode (31) befinden, der kleiner als ein im Voraus festgelegter erster Abstand ist.

3. Verfahren nach Anspruch 2, **dadurch gekennzeichnet, dass** eine Werkzeugelektrode (31) in Gestalt eines mit einer Axialbohrung (32) versehenen hohlen Rohres verwendet wird, und **dadurch**, dass die benannten Werte das Vorhandensein oder Nichtvorhandensein einer Verbindung zwischen der Axialbohrung (32) und der Öffnung (35) im umgebenden Material berücksichtigen.

4. Verfahren nach Anspruch 2 oder 3, **dadurch gekennzeichnet, dass** Werte der Längsabnutzung für die folgenden geometrischen Konfigurationen festgelegt werden:

- eine erste Konfiguration (Figur 2A), die durch das Vorhandensein zumindest zweier Wände, die sich in einem geringeren Abstand als einem im Voraus festgelegten zweiten maximalen Abstand befinden, und durch das Nichtvorhandensein einer Öffnung unter der Werkzeugelektrode definiert ist;
- eine zweite Konfiguration (Figur 2B), die durch das Vorhandensein zumindest zweier Wände, die sich in einem geringeren Abstand als dem im Voraus festgelegten zweiten maximalen Abstand befinden, und durch das Vorhandensein einer Öffnung unter der Werkzeugelektrode definiert ist;
- eine dritte Konfiguration (Figur 2C), die durch das Nichtvorhandensein von Wänden, die sich in einem geringeren Abstand von der Werkzeugelektrode als dem im Voraus festgelegten ersten Abstand befinden, und durch das Vorhandensein einer Öffnung unter der Werkzeugelektrode definiert ist;
- eine vierte Konfiguration (Figur 2D), die durch das Vorhandensein einer Wand, die sich in einem geringeren Abstand von der Werkzeugelektrode als dem im Voraus festgelegten ersten Abstand befindet, und durch das Vorhandensein einer Öffnung unter der Werkzeugelektrode definiert ist;
- eine fünfte Konfiguration (Figur 2E), die durch das Vorhandensein einer Wand, die sich in einem geringeren Abstand als dem im Voraus festgelegten ersten Abstand befindet, und durch das Nichtvorhandensein einer Öffnung unter der Werkzeugelektrode definiert ist;
- eine sechste Konfiguration (Figur 2F), die durch das Nichtvorhandensein von Wänden, die sich in einem geringeren Abstand als dem im Voraus festgelegten ersten Abstand befinden, und durch das Nichtvorhandensein einer Öffnung unter der Werkzeugelektrode definiert ist.

5. Verfahren nach Anspruch 4, **dadurch gekennzeichnet, dass** ausserdem Werte der Längsabnutzung für die folgenden Konfigurationen festgelegt werden:

- eine siebente Konfiguration (Figur 2G), um das Material zu bearbeiten, das an den Grenzen der vorausgegangenen geometrischen Konfigurationen und zwischen diesen Konfigurationen verblieben ist; und
- eine achte Konfiguration (Figur 2H), um eine oder mehrere Endbearbeitungen auszuführen.

6. Verfahren nach Anspruch 4 oder 5, **dadurch gekennzeichnet, dass** mit Hilfe der Simulationsmittel (MS) für jede Schicht verschiedene Zonen oder Bereiche der Bearbeitung bestimmt werden, innerhalb derer eine der benannten geometrischen Konfigurationen existiert, und dass eine Bahn der Werkzeugelektrode (31) in diesen Bearbeitungszonen oder -bereichen simuliert und/oder ausgeführt wird, indem die diesen geometrischen Konfigurationen entsprechenden Werte der Längsabnutzung angewendet werden.

7. Verfahren nach Anspruch 6, **dadurch gekennzeichnet, dass** die Bearbeitung der Bearbeitungszonen oder -bereiche in ansteigender Reihenfolge von der ersten bis zur letzten geometrischen Konfiguration ausgeführt wird, während die Freiheit gewahrt bleibt, lediglich die ersten fünf Konfigurationen zu vertauschen.

8. Verfahren nach einem der Ansprüche 1 bis 3, **dadurch gekennzeichnet, dass** für jede Schicht verschiedene Bearbeitungszonen oder -bereiche bestimmt werden, innerhalb derer eine gegebene geometrische Konfiguration existiert, dass ein Überstreichen der Oberfläche einer Schicht mit dem Werkzeug simuliert und/oder ausgeführt wird und dass die Ausgleichssignale jedesmal dann verändert werden, wenn das Werkzeug in eine andere Bearbeitungszone oder einen anderen Bearbeitungsbereich eintritt.

9. Verfahren nach einem der voraufgegangenen Ansprüche, **dadurch gekennzeichnet, dass** für jede der geometrischen Konfigurationen ein Wert der Längsabnutzung festgelegt wird, indem mit im Voraus aufgestellten Werten bearbeitet wird, indem die tatsächliche Längsabnutzung für die geometrischen Konfigurationen gemessen wird und indem die im Voraus aufgestellten Werte der Längsabnutzung durch die gemessenen Werte ersetzt werden.

10. Funkenerosions-Bearbeitungsvorrichtung zum Bearbeiten eines dreidimensionalen Werkstücks (14) durch schichtenweises Elektroerosionsfräsen mit:

- einem Organ, um eine Werkzeugelektrode (31) zylindrischer Gestalt, deren Durchmesser (R) im Verhältnis zu den Dimensionen der zu erodierenden Oberfläche klein ist, in Drehung zu versetzen,
- einer digitalen Steuereinheit (CN), die dafür bestimmt ist, die dreidimensionale Relativbewegung zwischen der Werkzeugelektrode (31) und dem Werkstück (14) zu steuern,
- einem Informatikmodul (MI), der es ermöglicht, die herauszuarbeitenden Formen in Gestalt einer Überlagerung virtueller Schichten (33) aufzuzeichnen,
- einem Simulationsmodul (MS), der es ermöglicht, eine Bahn der Werkzeugelektrode (31) derart zu simulieren, dass die Elektrode Streifen um Streifen jede der virtuellen Schichten (33) in Folge überstreicht, und dafür eingerichtet ist, entsprechende Steuersignale zur digitalen Steuereinheit (CN) zu übermitteln,
- einem Reguliermodul (MR), der es ermöglicht, die Längsabnutzung der Werkzeugelektrode entlang ihrer Bahn und deren Kompensation zu simulieren und Ausgleichssignale derart zur digitalen Steuereinheit (CN) zu übermitteln, dass diese Längsabnutzung reguliert und kompensiert wird, um die Bewegung des Endes der Werkzeugelektrode parallel zu den Schichten zu halten, wobei der Reguliermodul (MR) so eingerichtet ist, dass je nach der gegenseitigen geometrischen Konfiguration der Werkzeugelektrode (31) und des das Werkstück (14) umgebenden Materials mehrere Werte für die Längsabnutzung der Werkzeugelektrode (31) vorgesehen und jedem dieser Werte entsprechende Ausgleichssignale zur digitalen Steuereinheit (CN) übermittelt werden, **dadurch gekennzeichnet, dass** der Reguliermodul (MR) dafür eingerichtet ist, mehrere Werte der Längsabnutzung vorzusehen, indem er die geometrische Konfiguration des Flusses einer für die Bearbeitung verwendeten Bearbeitungsflüssigkeit zwischen der Werkzeugelektrode (31) und dem umgebenden Material berücksichtigt.

11. Vorrichtung nach Anspruch 10, **dadurch gekennzeichnet, dass** der Reguliermodul (MR) dafür eingerichtet ist, einerseits bei der Simulation der Werte der Längsabnutzung das Vorhandensein oder Nichtvorhandensein einer Öffnung im umgebenden Material unterhalb des Endes der Werkstückelektrode (31) zu berücksichtigen, die den Fluss der Bearbeitungsflüssigkeit erleichtert, und andererseits das Vorhandensein oder Nichtvorhandensein zumindest einer oder zweier Wände des umgebenden Materials zu berücksichtigen, die sich in einem Abstand von der Werkzeugelektrode (31) befinden, der kleiner als ein im Voraus festgelegter erster Abstand ist.

12. Vorrichtung nach Anspruch 11, **dadurch gekennzeichnet, dass** die Werkzeugelektrode (31) in Gestalt eines mit einer Axialbohrung (32) versehenen hohlen Rohres vorliegt, und **dadurch**, dass die benannten Werte der Längsabnutzung das Vorhandensein oder Nichtvorhandensein einer Verbindung zwischen der Axialbohrung und der Öffnung (35) im umgebenden Material berücksichtigen.

13. Vorrichtung nach Anspruch 11 oder 12, **dadurch gekennzeichnet, dass** der Reguliermodul (MR) so eingerichtet ist, dass für jede der geometrischen Konfigurationen 1 bis 6 ein Wert der Längsabnutzung vorgesehen wird, und zwar

| Öffnung Wand | Öffnung nicht vorhanden | Öffnung vorhanden |
|---|---|---|
| zwei paralle Wände vorhanden | 1. Konfiguration | 2. Konfiguration |
| eine Wand vorhanden | 5. Konfiguration | 4. Konfiguration |

(fortgesetzt)

| Öffnung Wand | Öffnung nicht vorhanden | Öffnung vorhanden |
|---|---|---|
| keine Wand vorhanden | 6. Konfiguration | 3. Konfiguration |

wo das Vorhandensein einer Wand bedeutet, dass diese sich in einem Abstand von der Werkzeugelektrode befindet, der geringer als ein im Voraus festgelegter erster Abstand oder gleich diesem ist;

und wo das Vorhandensein zweier Wände bedeutet, dass sich die beiden Wände in einem Abstand befinden, der geringer als ein im Voraus festgelegter maximaler zweiter Abstand oder gleich diesem ist.

**14.** Vorrichtung nach Anspruch 13, **dadurch gekennzeichnet, dass** der Reguliermodul (MR) ausserdem dafür eingerichtet ist, einen Wert der Längsabnutzung für die folgenden Konfigurationen vorzusehen:

- 7. Konfiguration, um Material zu bearbeiten, das an den Grenzen der vorausgegangenen geometrischen Konfigurationen und zwischen diesen Konfigurationen verblieben ist; und
- 8. Konfiguration, um eine oder mehrere Endbearbeitungen auszuführen.

**15.** Vorrichtung nach Anspruch 13 oder 14, **dadurch gekennzeichnet, dass** der Simulationsmodul (MS) dafür eingerichtet ist, für jede Schicht verschiedene Bearbeitungszonen oder -bereiche zu bestimmen, innerhalb derer eine der benannten geometrischen Konfigurationen existiert, und dass die Moduln der Simulation und Regulierung (MS, MR) dafür eingerichtet sind, eine Bahn der Werkzeugelektrode in diesen Bearbeitungszonen oder -bereichen zu simulieren und/oder zu steuern, indem sie die diesen geometrischen Konfigurationen entsprechenden Werte der Längsabnutzung anwenden.

**16.** Vorrichtung nach Anspruch 15, **dadurch gekennzeichnet, dass** die Moduln der Simulation und Regulierung (MS, MR) dafür eingerichtet sind, dass die Bearbeitung der Bearbeitungszonen oder -bereiche in ansteigender Reihenfolge von der ersten bis zur letzten geometrischen Konfiguration ausgeführt wird.

**17.** Vorrichtung nach einem der Ansprüche 10 bis 16, **dadurch gekennzeichnet, dass** der Reguliermodul (MR) dafür eingerichtet ist, die Bearbeitung mit im Voraus aufgestellten Werten der Längsabnutzung zu beginnen, für jede der geometrischen Konfigurationen die tatsächliche Längsabnutzung zu messen und die im Voraus aufgestellten Werte der Längsabnutzung durch die gemessenen Werte zu ersetzen.

Fig.1

Fig.2A

Fig.2B

Fig.2C

Fig.2D

Fig.2E

Fig.2F

Fig.2G

Fig.2H

## Fig.3A

## Fig.3B

## Fig.3C

## Fig.3D

## Fig.3E

## Fig.3F

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0555818 A
- CH 689182
- US 5911888 A
- US 5919380 A